(19) **Europäisches Patentamt European Patent Office Office européen des brevets**

(11) **EP 3 978 976 B1**

(12) **EUROPEAN PATENT SPECIFICATION**

(45) Date of publication and mention
of the grant of the patent:
**10.07.2024  Bulletin 2024/28**

(21) Application number: **20812872.8**

(22) Date of filing: **27.05.2020**

(51) International Patent Classification (IPC):
***G02B 6/44*** *(2006.01)*

(52) Cooperative Patent Classification (CPC):
**G02B 6/448;** G02B 6/4404; G02B 6/443;
G02B 6/4434

(86) International application number:
**PCT/JP2020/020942**

(87) International publication number:
**WO 2020/241696 (03.12.2020 Gazette 2020/49)**

(54) **OPTICAL FIBER TAPE CORE WIRE, OPTICAL FIBER CABLE, AND METHOD OF MANUFACTURING OPTICAL FIBER TAPE CORE WIRE**

KERNADER FÜR GLASFASERBAND, GLASFASERKABEL UND VERFAHREN VON HERSTELLUNG EINER KERNADER FÜR GLASFASERBAND

FIL DE COEUR DE BANDE DE FIBRE OPTIQUE, CÂBLE DE FIBRE OPTIQUE ET PROCÉDÉ DE FABRICATION DE FIL DE COEUR DE BANDE DE FIBRE OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.05.2019   JP 2019099147**
**17.06.2019   JP 2019111801**

(43) Date of publication of application:
**06.04.2022   Bulletin 2022/14**

(73) Proprietor: **SUMITOMO ELECTRIC INDUSTRIES, LTD.**
**Osaka-shi, Osaka 541-0041 (JP)**

(72) Inventors:
• **SATO Fumiaki**
**Osaka-shi, Osaka 541-0041 (JP)**
• **IWAGUCHI Noriaki**
**Osaka-shi, Osaka 541-0041 (JP)**
• **HAMAKUBO Katsushi**
**Osaka-shi, Osaka 541-0041 (JP)**
• **TSUCHIYA Kenta**
**Osaka-shi, Osaka 541-0041 (JP)**
• **AMANO Tsuguo**
**Osaka-shi, Osaka 541-0041 (JP)**
• **SUDUWA Deva Omalka Vayanthi**
**Osaka-shi, Osaka 541-0041 (JP)**

(74) Representative: **Hoffmann Eitle**
**Patent- und Rechtsanwälte PartmbB**
**Arabellastraße 30**
**81925 München (DE)**

(56) References cited:
**EP-A1- 3 422 062          EP-A1- 3 428 703**
**WO-A1-2008/120984      WO-A1-2017/094560**
**WO-A1-2017/145955      WO-A1-2017/175414**
**WO-A1-2018/105424      WO-A1-2018/105424**
**WO-A1-2018/220605      JP-A- 2005 301 237**
**JP-A- 2016 075 746       JP-A- H05 306 147**
**US-A1- 2015 030 296     US-A1- 2017 115 461**
**US-A1- 2017 285 287     US-A1- 2018 031 792**
**US-A1- 2020 064 550**

• **"Characteristics of a bending-loss insensitive single-mode optical fibre and cable for the access network; G.657 (11/09)", ITU-T STANDARD, INTERNATIONAL TELECOMMUNICATION UNION, GENEVA ; CH, no. G.657 (11/09), 13 November 2009 (2009-11-13), pages 1 - 22, XP017467182**

**Description**

TECHNICAL FIELD

The present disclosure relates to an optical fiber ribbon, an optical fiber cable, and a method for manufacturing the optical fiber ribbon.

This application is based upon and claims the benefit of priority from Japanese Patent Application No. 2019-111801 filed on June 17, 2019, and Japanese Patent Application No. 2019-099147 filed on May 28, 2019.

BACKGROUND ART

JP-A-2010-117592describes an optical fiber ribbon having a configuration in which optical fibers are disposed to be separated from each other so as not to contact each other and a bridge portion formed of a connecting resin is provided between the optical fibers.

JP-A-2015-52704and JP-A-2013-88617describe an intermittent connection type optical fiber ribbon in which a gap is formed between optical fibers having a small diameter of 220 $\mu$m or less and a distance between centers of the optical fibers is set to approximately 250 $\mu$m.

WO 2018/105424 and US 2017/115461 A1 disclose an intermittent connection type optical fiber core obtained by disposing a plurality of two-core optical fiber tape cores, wherein two optical fiber cores are connected and integrated, in parallel and intermittently providing a connection part wherein adjacent two-core optical fiber cores are connected to each other and a non-connection part wherein adjacent two-core optical fiber cores are not connected to each other.

SUMMARY OF INVENTION

The invention concerns an optical fiber ribbon as defined by the claims. An optical fiber ribbon according to one aspect of the present disclosure includes a plurality of optical fibers disposed in parallel to each other:

a connecting resin for connecting the plurality of optical fibers; and
a bridge portion formed of the connecting resin,
in which the plurality of optical fibers are disposed in a state where a side surface of the optical fiber is separated from or in contact with a side surface of another adjacent optical fiber,
in which the bridge portion is provided between the optical fibers disposed in the separated state,
in which an outer diameter of the optical fiber is 220 $\mu$m or less, and
in which an average distance between centers of the plurality of optical fibers is 220 $\mu$m or more and 280 $\mu$m or less.

An optical fiber cable according to one aspect of the present disclosure includes:

the optical fiber ribbon as described above; and
a cable sheath,
in which the optical fiber ribbon is mounted inside the cable sheath.

A method for manufacturing an optical fiber ribbon according to one aspect of the present disclosure includes:

a step of allowing a plurality of optical fibers of which outer diameter is 220 $\mu$m or less to be disposed in parallel to each other;
a step of allowing the plurality of optical fibers disposed in parallel to each other to be disposed in a state where a side surface of the optical fiber is separated from or in contact with a side surface of another adjacent optical fiber, setting an average distance between centers of the plurality of optical fibers to 220 $\mu$m or more and 280 $\mu$m or less and allowing a die to pass therethrough, and coating a portion in the separated state and outer peripheries of the plurality of optical fibers in the contact state with a connecting resin; and
a step of curing the connecting resin and providing a bridge portion between the optical fibers disposed in the separated state.

BRIEF DESCRIPTION OF DRAWINGS

Fig. 1 is a cross-sectional view illustrating an optical fiber ribbon according to a first embodiment not according to the claimed invention.

Fig. 2 is a schematic view illustrating a relationship between a pitch of an optical fiber ribbon of a reference example 1 and a V-groove of a fusion splicer in a fusion process.

Fig. 3 is a schematic view illustrating a relationship between a pitch of an optical fiber ribbon of a reference example 2 and the V-groove of the fusion splicer in the fusion process.

Fig. 4 is a schematic view illustrating a relationship between a pitch of an optical fiber ribbon according to the embodiment not according to the claimed invention and the V-groove of the fusion splicer in the fusion process.

Fig. 5 is a diagram illustrating a method for manufacturing the optical fiber ribbon according to the embodiment not according to the claimed invention.

Fig. 6 is a cross-sectional view illustrating an optical fiber cable according to the embodiment not according to the claimed invention.

Fig. 7 is a cross-sectional view illustrating an optical fiber ribbon according to a second embodiment not according to the claimed invention.

Fig. 8 is a plan view illustrating an optical fiber ribbon according to a third embodiment not according to the claimed invention.

Fig. 9 is a cross-sectional view illustrating an optical fiber ribbon according to a fourth embodiment not according to the claimed invention.

Fig. 10 is a cross-sectional view illustrating an optical fiber ribbon according to a fifth embodiment not according to the claimed invention.

Fig. 11 is a cross-sectional view illustrating an optical fiber ribbon according to a sixth embodiment not according to the claimed invention.

Fig. 12 is a cross-sectional view illustrating an optical fiber ribbon according to a seventh embodiment not according to the claimed invention.

Fig. 13 is a cross-sectional view illustrating an optical fiber cable for evaluation in which the optical fiber ribbon according to the embodiment is housed.

Fig. 14 is a graph illustrating a relationship between a deformation parameter of the optical fiber ribbon according to the embodiment and transmission loss in a low temperature environment.

DESCRIPTION OF EMBODIMENTS

[Technical problem]

In a case where optical fibers are disposed without a gap therebetween by using an optical fiber having a small diameter of 220 $\mu$m or less in an optical fiber ribbon, a distance between centers of the optical fibers becomes small, such that it is difficult for the optical fiber to be mounted in a V-groove of an existing fusion splicer.

Therefore, for example, as in the optical fiber ribbon described in Patent Literature 1, it is conceivable that the optical fibers are disposed to be separated from each other so as not to contact each other, and the bridge portion formed of the connecting resin is also provided between the optical fibers. However, a pitch of the V-groove of the existing fusion splicer is 250 $\mu$m, such that when the optical fiber ribbon is attempted to fit in the pitch thereof, a width of the bridge portion becomes narrow and thus flexibility of the optical fiber ribbon may become insufficient. When the flexibility of the optical fiber ribbon is insufficient, the optical fiber ribbon is difficult to be deformed, such that it becomes difficult to mount the optical fiber ribbon in the optical fiber cable at high density.

On the other hand, Patent Literatures 2 and 3 describe the intermittent connection type optical fiber ribbon in which the gap is formed between the optical fibers having the small diameter of 220 $\mu$m or less and the distance between the centers of the optical fibers is set to approximately 250 $\mu$m. However, the intermittent connection type optical fiber ribbon using the above-described optical fiber having the small diameter may be difficult to be manufactured by performing an intermittent process at high speed and with high accuracy in a longitudinal direction while the gap between the optical fibers is kept constant.

An object of the present disclosure is to provide an optical fiber ribbon, an optical fiber cable, and a method for manufacturing the optical fiber ribbon, in which an optical fiber having a small diameter of 220 μm or less is used, and the optical fiber is easily mounted in a V-groove having a pitch of 250 μm in an existing fusion splicer, such that high-density mounting can be achieved.

[Advantageous effects of the present disclosure]

According to the present disclosure, it is possible to provide an optical fiber ribbon, an optical fiber cable, and a method for manufacturing the optical fiber ribbon, in which an optical fiber having a small diameter of 220 μm or less is used, and the optical fiber is easily mounted in a V-groove having a pitch of 250 μm in an existing fusion splicer, such that high-density mounting can be achieved.

(Description of embodiments of the present disclosure)

First, embodiments of the present disclosure will be listed and described.

An optical fiber ribbon according to the claimed invention includes: a plurality of optical fibers disposed in parallel to each other;

a connecting resin for connecting the plurality of optical fibers; and
a bridge portion formed of the connecting resin,
in which the plurality of optical fibers are disposed in a state where a side surface of the optical fiber is separated from or in contact with a side surface of another adjacent optical fiber,
in which the bridge portion is provided between the optical fibers disposed in the separated state,
in which an outer diameter of the optical fiber is 220 μm or less, and
in which an average distance between centers of the plurality of optical fibers is 220 μm or more and 280 μm or less.

According to the optical fiber ribbon having the above-described configuration, even though the optical fiber having a small diameter of 220 μm or less is used, the optical fiber can be easily mounted in a V-groove of a pitch of 250 μm in an existing fusion splicer by adjusting a width of the bridge portion. Flexibility of the optical fiber ribbon can be improved, such that when the optical fiber ribbon is mounted in an optical fiber cable, for example, the optical fiber ribbon can be rolled to be mounted therein, and can be formed to be suitable for high-density mounting.

The number of the optical fibers disposed in the contact state is N, and the N may be a multiple of 2.

The connecting resin has a Young's modulus of 0.5 MPa or more and 200 MPa or less at room temperature.

According to the optical fiber ribbon having the above-described configuration, rigidity of the optical fiber ribbon is in an appropriate range. As a result, the optical fiber ribbon has appropriate flexibility.

A maximum thickness D of the optical fiber ribbon including the optical fiber is 235 μm or less, and in which when a width of the bridge portion is defined as W, a thickness of the bridge portion is defined as t, and a Young's modulus at room temperature of the connecting resin is defined as E, a deformation parameter P represented by $P = D \times E \times t^2/ W$ is 0.035 MPa.mm$^2$ or more and 14.2 MPa.mm$^2$ or less.

Since the deformation parameter P of the optical fiber ribbon is 0.035 or more and 14.2 or less, appropriate rigidity can be obtained. Since the optical fiber ribbon has appropriately high rigidity, buckling in a longitudinal direction caused by temperature shrinkage is hard to occur. The optical fiber ribbon is not too rigid, such that when the optical fiber cable housing the optical fiber ribbon is bent, the optical fiber ribbon is appropriately deformed in a direction of intersecting a width direction thereof, thereby making it possible to prevent an increase in transmission loss. Therefore, the optical fiber ribbon can further prevent the increase in transmission loss in a low temperature environment.

The bridge portion may include a recessed portion.

According to the optical fiber ribbon having the above-described configuration, the optical fiber ribbon can be easily deformed at the recessed portion. Since the optical fiber ribbon can be easily torn from the recessed portion, single core separation can be easily performed.

The bridge portion may be provided to be biased toward any one side surface of one side surface and the other side surface of a parallel surface of the optical fiber ribbon.

According to the optical fiber ribbon having the above-described configuration, since the connecting resin is provided to be biased toward one side surface of the parallel surface of the optical fiber ribbon, the optical fiber ribbon is easy to be bent in a specific direction, and when the optical fiber ribbon is mounted in the optical fiber cable, the optical fiber ribbon is rolled to be easily mounted therein, for example.

The bridge portion intermittently may include a dividing portion in a longitudinal direction of the optical fiber ribbon.

According to the optical fiber ribbon having the above-described configuration, since the optical fiber ribbon intermittently includes the dividing portion, the optical fiber ribbon can be easily deformed. Since the optical fiber ribbon can be easily torn from the dividing portion as a starting point, single core separation is easily performed.

{8} The connecting resin may contain a silicon-based release agent

According to the optical fiber ribbon having the above-described configuration, since the connecting resin is a resin containing the silicon-based release agent, a friction coefficient can be reduced. The friction coefficient of the connecting resin is small, such that when a plurality of optical fiber ribbon having the above-described configurations are mounted in the optical fiber cable, each optical fiber ribbon easily moves in the longitudinal direction. Therefore, it is possible to prevent the increase in transmission loss in the optical fiber cable.

A peeling strength between an outermost layer of the optical fiber and the connecting resin may be less than 0.1 N/mm.

According to the optical fiber ribbon having the above-described configuration, the connecting resin can be easily peeled off from the outermost layer of the optical fiber.

The optical fiber includes a glass fiber and a coating that covers an outer periphery of the glass fiber,

in which the coating includes two coating layers,
in which an outer coating layer of the two coating layers may be a cured product of a resin composition containing: a base resin containing a urethane acrylate oligomer or a urethane methacrylate oligomer, a monomer having a phenoxy group, a photopolymerization initiator, and a silane coupling agent; and a hydrophobic inorganic oxide particle, and
in which a content of the inorganic oxide particle in the resin composition may be 1% by mass or more and 45% by mass or less based on a total amount of the resin composition.

According to the optical fiber ribbon having the above-described configuration, lateral pressure resistance of the optical fiber becomes stronger. Therefore, since the increase in transmission loss when the optical fiber ribbon is mounted in the optical fiber cable can be prevented, the optical fiber ribbon can be formed to be further suitable for high-density mounting.

In the optical fiber, bending loss at a wavelength of 1,550 nm may be 0.5 dB or less for a bending diameter of $\varphi$15 mm $\times$ 1 turn, and 0.1 dB or less for a bending diameter of $\varphi$20 mm $\times$ 1 turn.

According to the optical fiber ribbon having the above-described configuration, a lateral pressure characteristic can be improved, and an attenuation at low temperature characteristic can be improved.

An optical fiber cable according to one aspect of the present disclosure includes the optical fiber ribbon according to the above and a cable sheath,

in which the optical fiber ribbon is mounted inside the cable sheath.

According to the optical fiber cable having the above-described configuration, while the optical fiber having the small diameter of 220 $\mu$m or less is used, the optical fiber ribbon that can be easily mounted in the V-groove having the pitch of 250 $\mu$m in the existing fusion splicer can be mounted at high density.

A method for manufacturing an optical fiber ribbon according to one aspect of the present disclosure includes:

a step of allowing a plurality of optical fibers of which outer diameter is 220 $\mu$m or less to be disposed in parallel to each other;
a step of allowing the plurality of optical fibers disposed in parallel to each other to be disposed in a state where a side surface of the optical fiber is separated from or in contact with a side surface of another adjacent optical fiber, setting an average distance between centers of the plurality of optical fibers to 220 $\mu$m or more and 280 $\mu$m or less and allowing a die to pass therethrough, and coating a portion in the separated state and outer peripheries of the plurality of optical fibers in the contact state with a connecting resin; and
a step of curing the connecting resin and providing a bridge portion between the optical fibers disposed in the separated state.
According to the method for manufacturing the optical fiber ribbon, while the optical fiber having a small diameter of 220 $\mu$m or less is used, it is possible to manufacture the optical fiber ribbon that can be easily mounted in a V-groove having a pitch of 250 $\mu$m in an existing fusion splicer and that is formed to be suitable for high-density mounting.

(Details of Embodiments of the present disclosure)

Hereinafter, specific examples related to an optical fiber ribbon, an optical fiber cable, and a method for manufacturing the optical fiber ribbon according to embodiments of the present disclosure will be described with reference to the drawings.

(First embodiment not according to the claimed invention)

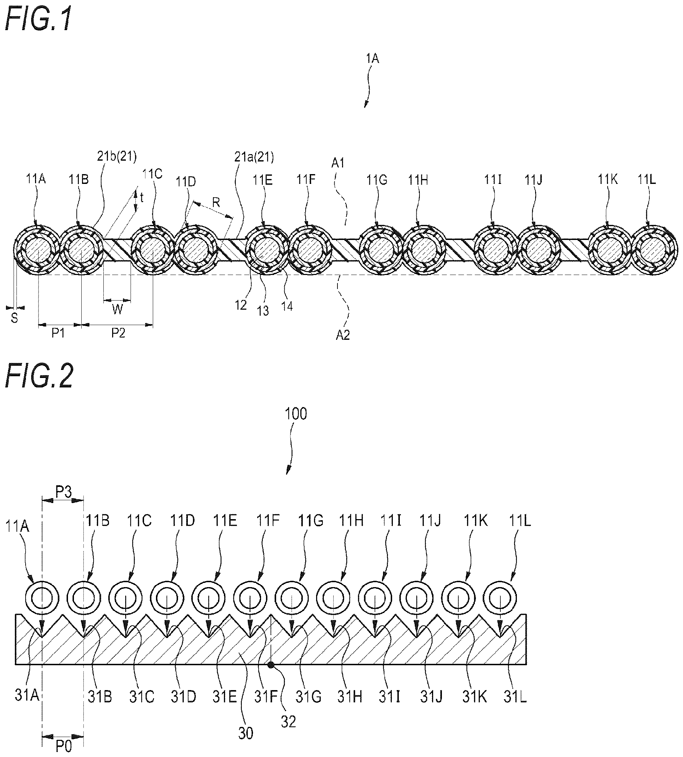

Fig. 1 is a cross-sectional view illustrating an optical fiber ribbon 1A according to a first embodiment.

As illustrated in Fig. 1, a plurality of (12 pieces in this example) optical fibers 11 (11A to 11L in this example) are disposed in parallel to each other in the optical fiber ribbon 1A. 12 pieces of the optical fibers 11A to 11L are disposed in a state where a side surface of the optical fiber is separated from or in contact with a side surface of another adjacent optical fiber for each N core. The optical fibers 11A to 11L of this example are disposed by repeating, every two cores, a state where the side surface of the optical fiber is disposed at a certain distance from the side surface of another adjacent optical fiber and a state where the side surface of the optical fiber is in contact with the side surface of another adjacent optical fiber. N may be a multiple of 2. 12 pieces of the optical fibers 11A to 11L disposed in parallel to each other are all collectively spliced with each other by a connecting resin 21.

The connecting resin 21 is provided between two optical fibers so as to fill a gap between the optical fibers disposed in a state where a certain distance is provided therebetween, and is provided around the optical fiber 11 so as to cover the optical fiber 11. The connecting resin 21 provided between the optical fibers forms a bridge portion 21a that bridges the optical fibers 11 adjacent to each other. The connecting resin 21 provided around the optical fiber 11 other than the portion between the optical fibers forms an outer peripheral coating portion 21b that covers an outer periphery of the optical fiber 11. The optical fiber ribbon 1A is a bridge type optical fiber ribbon including a bridge-shape splicing portion provided between predetermined (every two cores) optical fibers in the state where the side surface of the optical fiber is separated from the side surface of another adjacent optical fiber.

In the optical fiber ribbon 1A, for example, in a case where M is an even number, the bridge portion 21a is provided between the M-th optical fiber and the (M + 1)-th optical fiber. In the case of this example, the bridge portion 21a is provided between the optical fibers 11B and 11C, between 11D and 11E, between 11F and 11G, between 11H and 111, and between 11J and 11K.

A thickness t of the bridge portion 21a (a thickness in a direction orthogonal to a parallel direction of the optical fiber) is formed to be thinner than a thickness obtained by adding an outer diameter R of the optical fiber 11 and a thickness s of the outer peripheral coating portion 21b. The bridge portion 21a is formed so that a location of an upper end of the bridge portion 21a does not exceed a location of a broken line A1 connecting upper ends of the outer peripheral coating portions 21b coated around the optical fiber 11. The bridge portion 21a is formed so that a location of a lower end of the bridge portion 21a does not exceed a location of a broken line A2 connecting lower ends of the outer peripheral coating portion 21b. In the case of this example, the bridge portion 21a is formed so as to splice almost central portions of the optical fibers 11 adjacent to each other.

The Young's modulus of the connecting resin 21 (the bridge portion 21a and the outer peripheral coating portion 21b) is 0.5 MPa or more and 200 MPa or less at room temperature (for example, 23°C). For example, an ultraviolet curable resin, a thermosetting resin, or the like are used for the connecting resin 21. Adhesion between an outermost layer of the optical fiber 11 and the connecting resin 21 is desirably small, and for example, the connecting resin 21 may be formed of a resin containing a silicon-based release agent. By containing the silicon-based release agent in the connecting resin 21, the adhesion therebetween becomes small and thus peelability of the connecting resin 21 is improved, thereby making it also possible to facilitate a work of separating the optical fibers 11A to 11L into a single core. A friction coefficient of the connecting resin 21 is smaller than that of a resin containing no silicon-based release agent, such that for example, when a plurality of optical fiber ribbons 1A are mounted in the optical fiber cable, each optical fiber ribbon 1A easily moves in the longitudinal direction. Therefore, when the optical fiber ribbon 1A is mounted in the optical fiber cable, it is possible to prevent an increase in transmission loss in, for example, a low temperature environment.

As an index of the adhesion, there is peeling strength which is a force per unit length required for peeling off the connecting resin 21 from an outer peripheral surface of the optical fiber 11. In order to cause the peeling, it is desirable that the peeling strength between the outermost layer of the optical fiber 11 and the connecting resin 21 is less than 0.1 N/mm.

The peeling strength between the outer peripheral surface of the optical fiber 11 and the connecting resin 21 is measured as follows.

In the optical fiber ribbon 1A, the connecting resin 21 at opposite ends of the optical fiber 11 in a width direction is cut with a knife and a razor, and separated. Next, since the connecting resin 21 is separated vertically, one of the separated connecting resins 21 is grasped and pulled in a direction perpendicular to the longitudinal direction and the width direction (in a direction of 90 degrees) of the optical fiber 11 at a speed of 100 mm/min, and a tensile force at that time is measured. The tensile force and a length of the peeled connecting resin 21 are converted into the peeling strength per unit length.

The optical fiber 11 includes, for example, a glass fiber 12 formed of a core and a clad, and two coating layers 13 and 14 that cover a periphery of the glass fiber 12. The optical fiber 11 may have a colored layer. The inner coating layer 13 of the two coating layers is formed of a cured product of a primary resin. The outer coating layer 14 of the two coating layers is formed of a cured product of a secondary resin.

As the primary resin forming the inner coating layer 13 in contact with the glass fiber 12, a soft resin having a relatively low Young's modulus is used as a buffer layer. As the secondary resin forming the outer coating layer 14, a hard resin having a relatively high Young's modulus is used as a protective layer. The Young's modulus of the cured product of the secondary resin is 900 MPa or more, desirably 1000 MPa or more, and more desirably 1500 MPa or more at room temperature (for example, 23°C).

It is desirable that the secondary resin forming the outer coating layer 14 is a resin composition containing: a base resin containing a urethane acrylate oligomer or a urethane methacrylate oligomer, a monomer having a phenoxy group, a photopolymerization initiator, and a silane coupling agent; and a hydrophobic inorganic oxide particle. A content of the inorganic oxide particle in the resin composition is 1% by mass or more and 45% by mass or less based on a total amount of the resin composition.

Hereinafter, acrylate or methacrylate corresponding thereto is referred to as (meth) acrylate.

As the urethane (meth) acrylate oligomer, an oligomer obtained by reacting a polyol compound, a polyisocyanate compound, and a hydroxyl group-containing (meth) acrylate compound can be used. This oligomer can be obtained, for example, by reacting polypropylene glycol, isophorone diisocyanate, hydroxyethyl acrylate, and methanol having a molecular weight of 4,000.

As the monomer having the phenoxy group, a (meth) acrylate compound having the phenoxy group can be used. For example, the monomer having the phenoxy group includes nonylphenol EO modified acrylate (a trade name "ARONIX M-113" of Toagosei Co., Ltd.), or the like.

As the photopolymerization initiator, one of known radical photopolymerization initiators can be appropriately selected and used, and for example, the photopolymerization initiator includes 2,4,6-trimethylbenzoyldiphenylphosphine oxide or the like.

The silane coupling agent is not particularly limited as long as the silane coupling agent does not interfere with the curing of the resin composition. For example, the silane coupling agent includes 3-mercaptopropyltrimethoxysilane or the like.

The hydrophobic inorganic oxide particle has a hydrophobic group introduced into a surface of the inorganic oxide particle. The inorganic oxide particle is, for example, a silica particle. The hydrophobic group may be a reactive group such as a (meth) acryloyl group, a vinyl group, or the like, or a non-reactive group such as a hydrocarbon group (for example, an alkyl group), an aryl group (for example, a phenyl group), or the like.

A lateral pressure characteristic of the optical fiber 11 is improved by blending the inorganic oxide particle with the secondary resin forming the outer coating layer 14. The primary resin forming the inner coating layer 13 and the secondary resin are formed of, for example, an ultraviolet curable resin, a thermosetting resin, or the like. It is desirable that the optical fiber 11 has bending loss equivalent to that of ITU-T G.657A2 in which the bending loss at a wavelength of 1,550 nm is 0.5 dB or less for a bending diameter of $\varphi$15 mm $\times$ 1 turn, and 0.1 dB or less for a bending diameter of $\varphi$20 mm $\times$ 1 turn. By using the above-described optical fiber, the lateral pressure characteristic can be improved, and an attenuation at low temperature characteristic can also be improved.

In the optical fiber ribbon 1A configured as described above, the outer diameter R of the optical fiber 11 (11A to 11L) is 220 $\mu$m or less. In the case of this example, a distance between centers of the optical fibers 11 is formed so that a distance P1 between the centers thereof in a state where the optical fibers are in contact with each other is set to approximately 200 $\mu$m. A distance P2 between the centers thereof in a state where the optical fibers are separated from each other at a certain distance is formed to be approximately 300 $\mu$m. Therefore, in the optical fiber ribbon 1A, an average distance P ((P1 + P2) / 2) between the centers of the optical fibers 11 is formed to be 220 $\mu$m or more and 280 $\mu$m or less. In the case of this example, a width W of the bridge portion 21a (a width in the same direction as the parallel direction of the optical fiber 11) is formed to be approximately 100 $\mu$m.

That is, in Fig. 1, the distance P1 between the centers of the optical fibers 11A and 11B is formed to be approximately 200 $\mu$m, the distance P2 between the centers of the optical fibers 11B and 11C is formed to be approximately 300 $\mu$m, and the width W of the bridge portion 21a provided between the optical fibers 11B and 11C is formed to be approximately 100 $\mu$m.

In this example, the number of cores of the optical fiber ribbon 1A is set to 12, and the number of cores thereof is not limited thereto. The number of cores of the optical fiber ribbon 1A may be a multiple of 4, such as, for example, 24 cores, 48 cores, or the like.

Next, fusion of the optical fiber ribbon will be described with reference to Figs. 2 to 4.

When the optical fiber ribbons are spliced with each other, a multi-core fusion splicer (not illustrated) is used, thereby making it possible to collectively fuse and splice a plurality of optical fibers. As illustrated in Figs. 2 to 4, the multi-core fusion splicer is provided with a V-groove base 30 including a plurality of (12 in the example of Figs. 2 to 4) V-grooves 31A to 31L for allowing the respective optical fibers to be disposed. These V-grooves 31A to 31L are generally formed with a pitch P0 of 250 μm in accordance with the international standard for the diameter of the optical fiber. In order to collectively fuse and splice the plurality of optical fibers, the respective optical fibers are required to be sequentially disposed one by one with respect to the respective V-grooves 3 1A to 31L of the V-groove base 30.

Fig. 2 illustrates a fusion process of an optical fiber ribbon 100 of a reference example 1 in which the optical fibers 11A to 11L having an outer diameter of approximately 200 μm are disposed in parallel to each other in a state where a distance P3 between the centers of the optical fibers is set to approximately 250 μm. A pitch P0 of the respective V-grooves 3 1Ato 31L in the V-groove base 30 of the multi-core fusion splicer is formed to be approximately 250 μm.

At the time of performing fusion splicing, as illustrated in Fig. 2, the optical fibers 11A to 11L in a state where the connecting resin having a predetermined length at a tip is removed are disposed above the V-groove base 30. The optical fibers 11A to 11L are disposed so that, for example, a center location 32 of the V-groove base 30 in a direction in which the V-grooves are disposed in parallel to each other coincides with a center location in a direction in which the optical fibers 11A to 11L are disposed in parallel to each other. In this state, a clamp lid (not illustrated) of the multi-core fusion splicer is closed, and the optical fibers 11A to 11L are pushed down from an upper side by the clamp lid.

In the case of the optical fiber ribbon 100 having the configuration as shown in reference example 1, since the distance P3 between the centers thereof is formed to be equal to the pitch P0 of the V-groove, the respective optical fibers 11A to 11L are disposed so as to face the respective V-grooves 31A to 31L. Therefore, the optical fibers 11A to 11L are pushed down approximately vertically, and are sequentially housed one by one in the V-grooves 3 1A to 31L, respectively.

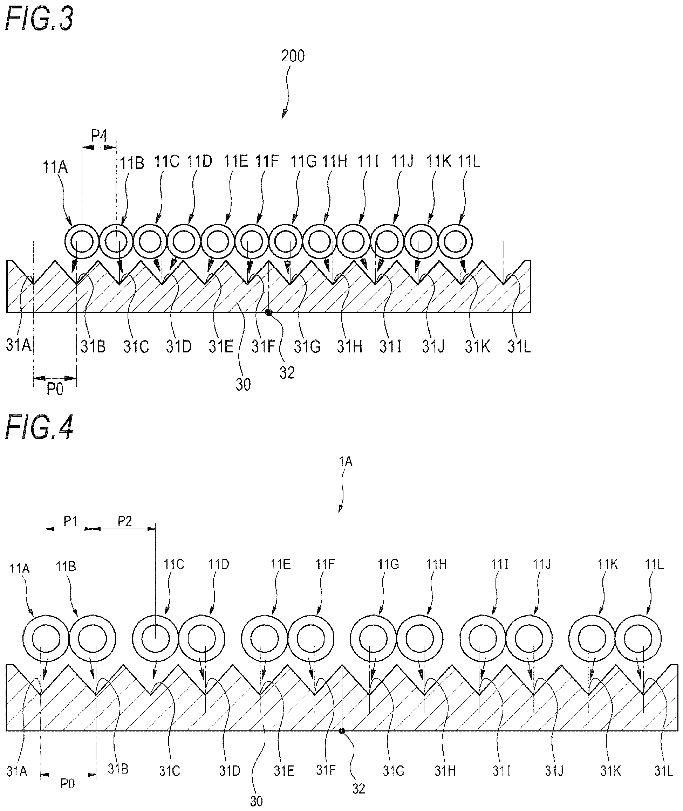

Fig. 3 illustrates a fusion process of an optical fiber ribbon 200 of a reference example 2 in which the optical fibers 11A to 11L having an outer diameter of approximately 200 μm are disposed in parallel to each other in a state where a distance P4 between the centers of the optical fibers is set to approximately 200 μm. The pitch P0 of the respective V-grooves 3 1Ato 31L in the V-groove base 30 is set to 250 μm.

At the time of performing fusion splicing, as illustrated in Fig. 3, the optical fibers 11A to 11L are disposed above the V-groove base 30 so that the center locations coincide with each other in the same manner as that of Fig. 2.

In the case of the optical fiber ribbon 200 having the configuration as in the reference example 2, since the distance P4 between the centers of the optical fibers 11A to 11L is formed to be smaller than the pitch P0 of the V-grooves 31A to 31L, the optical fibers 11A to 11L are disposed so as to gather in a direction of the center location 32 of the V-groove base 30. Therefore, the optical fibers 11A to 11L are pushed down along a groove wall of the V-groove, for example, in a direction of an arrow. Therefore, the optical fibers 11A to 11L cannot be sequentially housed in the V-grooves 31A to 31L. For example, the optical fibers may not be housed in the V-grooves 31A and 31L at an end.

Fig. 4 illustrates a fusion process of the optical fiber ribbon 1A according to the first embodiment illustrated in Fig. 1. The pitch P0 of the respective V-grooves 31A to 31L in the V-groove base 30 is 250 μm. At the time of performing fusion splicing, as illustrated in Fig. 4, the optical fibers 11A to 11L are disposed above the V-groove base 30 so that the center locations coincide with each other in the same manner as that of Fig. 2.

In the case of the optical fiber ribbon 1A according to the first embodiment, the distance P1(approximately 200 μm) between the centers of the optical fibers in a state where the optical fibers are in contact with each other is formed to be smaller than the pitch P0 of the V-groove. However, the distance P2 (approximately 300 μm) between the centers of the optical fibers in a state where the bridge portion 21a is provided between the optical fibers is formed to be larger than the pitch P0 of the V-groove. Therefore, in the optical fiber ribbon 1A, the average distance P between the centers of the optical fibers 11 is approximately 250 μm, such that when the optical fibers 11A to 11L are pushed down by the clamp lid, the optical fibers 11A to 11L are guided along the groove wall of the V-groove in a direction of an arrow illustrated in Fig. 4. Accordingly, the optical fibers 11A to 11L are sequentially housed one by one in the V-grooves 31Ato 31L, respectively.

In the above-described configuration, the optical fibers in a state where the connecting resins are removed are housed in the V-grooves 31A to 31L, and for example, in addition to removal of the connecting resin, the coating layers may be further removed so that only the glass fibers may be housed in the V-grooves 31A to 31L.

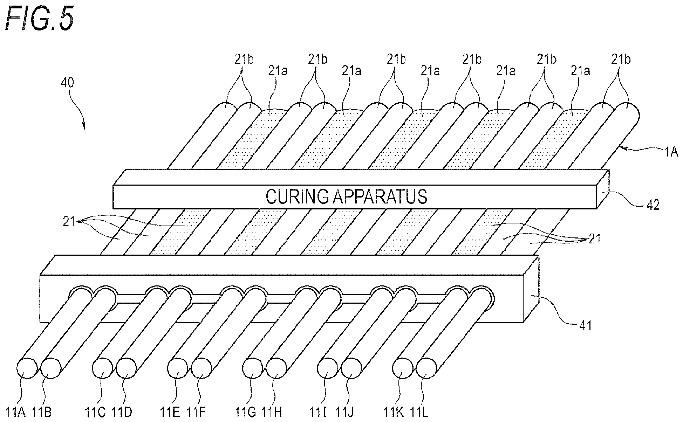

Next, a method for manufacturing the optical fiber ribbon 1A will be described with reference to Fig. 5.

First, the optical fibers 11A to 11L are manufactured by performing drawing so that a diameter of the glass fiber 12 is set to approximately 125 μm and a diameter of the outer coating layer 14 is set to approximately 200 μm. The optical fibers 11A to 11L may have a colored layer in order to have identifiability.

12 pieces of the optical fibers 11A to 11L are prepared, two optical fibers are caused to contact each other, and a coating die 41 of a manufacturing apparatus 40 passes therethrough in a state where a gap having a certain distance is provided between the optical fibers every two cores. When the optical fiber ribbon 1A is manufactured, the coating die 41 is formed with a hole of a die inlet portion so that the gap between the optical fibers every two cores is set to approximately 100 μm. The outer peripheries of the optical fibers 11A and 11B, 11C and 11D, 11E and 11F, 11G and 11H, 111 and 11J, and 11K and 11L in a state of contacting each other, and the gaps between the optical fibers 11B and 11C, 11D and 11E, 11F and 11G, 11H and 111, and 11J and 11K in a state where the gap having the certain distance is provided therebetween are coated with the connecting resin 21 by the coating die 41.

With respect to the optical fibers 11A to 11L coated with the connecting resin 21, for example, when an ultraviolet curable resin is used for the connecting resin 21, a curing apparatus 42 emits ultraviolet rays to cure the connecting resin 21. The bridge portion 21a is formed by curing the connecting resin 21 applied to the gap between the optical fibers. The outer peripheral coating portion 21b is formed by coating the outer peripheries of the optical fibers in the state of contacting each other with the connecting resin 21 and then by curing the connecting resin 21. As a result, the distance P1 between the centers of the optical fibers 11A and 11B, 11C and 11D, 11E and 11F, 11G and 11H, 111 and 11J, and 11K and 11L is set to approximately 200 $\mu$m, and the distance P2 between the centers of the optical fibers 11B and 11C, 11D and 11E, 11F and 11G, 11H and 111, and 11J and 11K is set to approximately 300 $\mu$m, thereby manufacturing the optical fiber ribbon 1A in which the average distance P between the centers of the optical fibers 11A to 11L is set to 220 $\mu$m or more and 280 $\mu$m or less.

In the above-described manufacturing method, the connecting resin 21 forming the bridge portion 21a and the outer peripheral coating portion 21b is coated by the coating die 41, but the present invention is not limited thereto. For example, first, only the connecting resin 21 forming the outer peripheral coating portion 21b may be coated by the coating die 41, and then the connecting resin 21 forming the bridge portion 21a may be coated by a coating apparatus such as a dispenser or the like.

In the optical fiber ribbon 1A manufactured as described above, as illustrated in Fig. 4, when using the existing fusion splicer in which the pitch of the V-grooves 31A to 31L is set to 250 $\mu$m, the respective optical fibers 11A to 11L are disposed at locations corresponding to those of the respective V-grooves 31A to 31L. Therefore, the optical fibers 11A to 11L can be housed one by one in the respective V-grooves 31A to 31L. Therefore, according to the optical fiber ribbon 1A, while the optical fiber 11 having a small diameter of 220 $\mu$m or less is used, the bridge portion 21a is provided between the optical fibers every two cores, and the optical fiber 11 can be easily mounted in the V-groove having the pitch of 250 $\mu$m in the existing fusion splicer. Accordingly, flexibility of the optical fiber ribbon 1A can be improved, such that when the optical fiber ribbon 1A is mounted in the optical fiber cable, for example, the bridge portion 21a can be bent and the whole optical fiber ribbon 1A can be rolled to be assembled and to be mounted therein. Therefore, the optical fiber ribbon 1A can be used as an optical fiber ribbon suitable for high-density mounting.

In the optical fiber ribbon 1A, since the Young's modulus of the connecting resin 21 is in the range of 0.5 MPa or more and 200 MPa or less, rigidity of the optical fiber ribbon 1A is in an appropriate range. Therefore, according to the optical fiber ribbon 1A, a configuration having appropriate flexibility can be formed, and an optical fiber ribbon suitable for high-density mounting can be formed.

According to the optical fiber ribbon 1A, since the connecting resin 21 contains the silicon-based release agent, the adhesion between the outermost layer of the optical fiber 11 and the connecting resin 21 can be reduced, such that the peeling strength can be set to less than 0.1 N/mm. The friction coefficient of the connecting resin 21 is smaller than that of, for example, a resin that does not contain silicon, such that, for example, when a plurality of optical fiber ribbons 1A are mounted in the optical fiber cable, each optical fiber ribbon 1A easily moves in the longitudinal direction. Therefore, when the plurality of optical fiber ribbons 1A are mounted in the optical fiber cable, for example, the increase in transmission loss in the low temperature environment can be prevented. For example, a loss fluctuation value of a loss temperature characteristic at - 40°C can be reduced to about two-thirds as compared with a silicon-free optical fiber ribbon.

According to the optical fiber ribbon 1A, by using the cured product of the above-described resin composition (the resin containing the inorganic oxide particle) as the outer coating layer 14 forming the coating in the optical fiber 11, lateral pressure resistance of the optical fiber 11 can be strengthened. Therefore, when the optical fiber ribbon 1A is formed by using the above-described optical fiber 11, for example, it is possible to further prevent the increase in transmission loss when the plurality of optical fiber ribbons 1A are mounted in the optical fiber cable. Therefore, the optical fiber ribbon more suitable for high-density mounting in the optical fiber cable can be formed. For example, the transmission loss at - 40°C can be improved to 0.3 dB/km as compared with the maximum transmission loss of 0.5 dB/km of the optical fiber that does not contain the resin composition.

Even though an optical fiber equivalent to ITU-T G.657A2, in which the bending loss at the wavelength of 1,550 nm is 0.5 dB or less for the bending diameter of $\varphi$15 mm × 1 turn, and 0.1 dB or less for the bending diameter of $\varphi$20 mm × 1 turn, is used, the same effect can be obtained.

According to the method for manufacturing the optical fiber ribbon 1A, it is possible to manufacture the optical fiber ribbon 1A suitable for high-density mounting by using the optical fiber having the small diameter of 220 $\mu$m or less and by allowing the optical fiber to be easily mounted in the V-groove having the pitch of 250 $\mu$m in the existing fusion splicer.

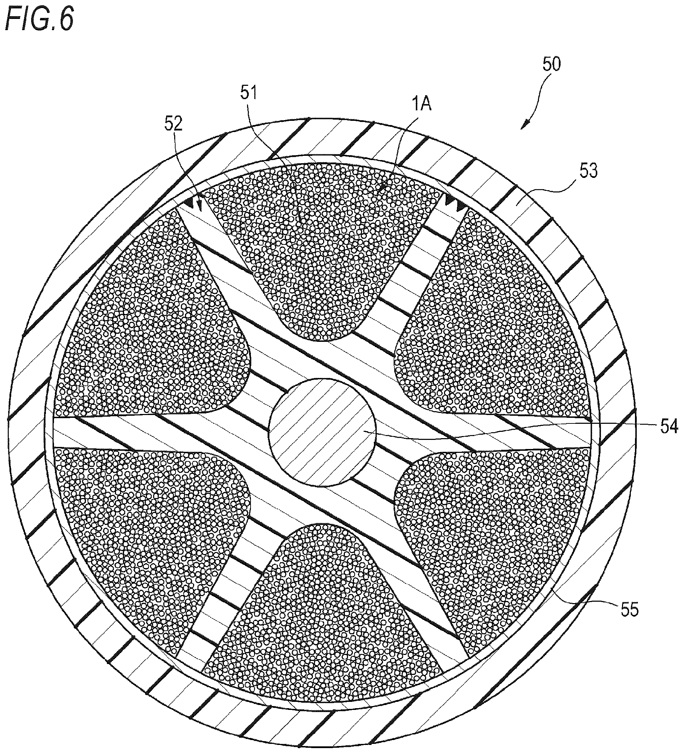

Next, an example of an optical fiber cable according to the embodiment will be described with reference to Fig. 6.

Fig. 6 is a cross-sectional view of a slot type optical fiber cable 50 using the above-described optical fiber ribbon 1A.

The optical fiber cable 50 includes a slot rod 52 including a plurality of slot grooves 51, a plurality of optical fiber ribbon 1A, and a cable sheath 53. The optical fiber cable 50 has a structure in which a plurality of slot grooves 51 are radially provided in the slot rod 52 including a tension member 54 at a center. The plurality of slot grooves 51 may be provided in a stranded shape such as a spiral shape, an SZ shape, or the like in the longitudinal direction of the optical fiber cable 50. The respective slot grooves 51 respectively house a plurality of the optical fiber ribbons 1A which are rolled from a parallel state to be formed in a dense state. A press wrapping tape 55 is wrapped around the slot rod 52, and the cable sheath 53 is formed around the press wrapping tape 55.

The optical fiber cable 50 has, for example, an outer diameter of 34 mm, and is formed as a cable in which 6 slot grooves 51 are provided, 48 optical fiber ribbons 1A are housed in each slot groove 51, and the optical fibers 11 having 3,456 cores are provided. In this case, core density calculated from the number of cores of the optical fiber cable and a cross-sectional area of the optical fiber cable is 3.81 cores/mm$^2$.

The optical fiber cable is not limited to the slot type optical fiber cable, and may be, for example, a slotless type optical fiber cable.

According to the optical fiber cable 50 having the above-described configuration, the optical fiber 11 having a small diameter, the outer diameter of which is 220 μm or less, is used, thereby making it possible to mount, at high density, the optical fiber ribbon 1A having a configuration that allows the optical fiber 11 to be easily mounted in the V-groove having the pitch of 250 μm in the existing fusion splicer.

(Second embodiment not according to the claimed invention)

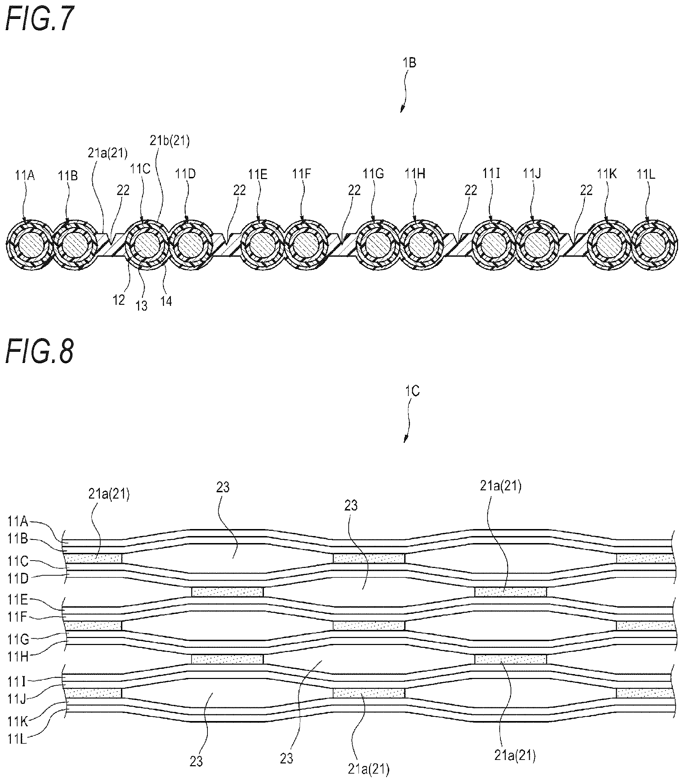

Next, an optical fiber ribbon 1B according to a second embodiment will be described with reference to Fig. 7. The same configuration as that of the optical fiber ribbon 1A according to the first embodiment will be denoted by the same reference sign, and the description thereof will be omitted.

Fig. 7 shows a cross-sectional view of the optical fiber ribbon 1B. The optical fiber ribbon 1B is different from the optical fiber ribbon 1A according to the first embodiment in that each bridge portion 21a includes a recessed portion 22. The recessed portion 22 is formed in, for example, a triangle shape whose angle becomes narrow from one surface of the bridge portion 21a (an upper surface in Fig. 7) toward a surface opposite to the one surface (a lower surface in Fig. 7). Other configurations are the same as those of the optical fiber ribbon 1A.

According to the optical fiber ribbon 1B having the above-described configuration, the recessed portion 22 is provided in the bridge portion 21a, such that the optical fiber ribbon 1B can be easily deformed by the recessed portion 22. Since the bridge portion 21a can be easily torn from the recessed portion 22, single core separation of the optical fiber 11 in the optical fiber ribbon 1B can be easily performed.

(Third embodiment not according to the claimed invention)

An optical fiber ribbon 1C according to a third embodiment will be described with reference to Fig. 8. The same configuration as that of the optical fiber ribbon 1A according to the first embodiment will be denoted by the same reference sign, and the description thereof will be omitted.

Fig. 8 illustrates a plan view of the optical fiber ribbon 1C. The optical fiber ribbon 1C is different from the optical fiber ribbon 1A according to the first embodiment in that the bridge portion 21a includes a dividing portion 23. The dividing portion 23 is formed intermittently in a longitudinal direction of the optical fiber ribbon 1C. In this example, the dividing portion 23 is formed in each bridge portion 21a, and a length of the dividing portion 23 in the longitudinal direction of the optical fiber ribbon 1C is formed to be longer than a length of the bridge portion 21a. The optical fiber ribbon 1C is an intermittent connection type optical fiber ribbon in which the bridge portion 21a and the dividing portion 23 are intermittently provided in the longitudinal direction every two optical fibers. Other configurations are the same as those of the optical fiber ribbon 1A. The plan view of Fig. 8 illustrates a state in which the dividing portion 23 is opened in a parallel direction of the optical fiber 11.

According to the optical fiber ribbon 1C having the above-described configuration, since the dividing portion 23 is intermittently provided in the bridge portion 21a provided every two cores, the optical fiber ribbon 1C can be easily deformed. Therefore, when the optical fiber ribbon 1C is mounted in the optical fiber cable, the optical fiber ribbon 1C can be easily rolled and mounted therein, such that an optical fiber ribbon suitable for high-density mounting can be formed. Since the bridge portion 21a can be easily torn from the dividing portion 23 as a starting point, single core separation of the optical fiber 11 in the optical fiber ribbon 1C can be easily performed.

Since the bridge portion 21a is configured to be provided every two cores, the width W of the bridge portion 21a can be widened as compared with a configuration in which the bridge portion is provided between the respective cores. Therefore, it becomes easy to provide the dividing portion 23 in the bridge portion 21a in the optical fiber ribbon 1C.

(Fourth embodiment not according to the claimed invention)

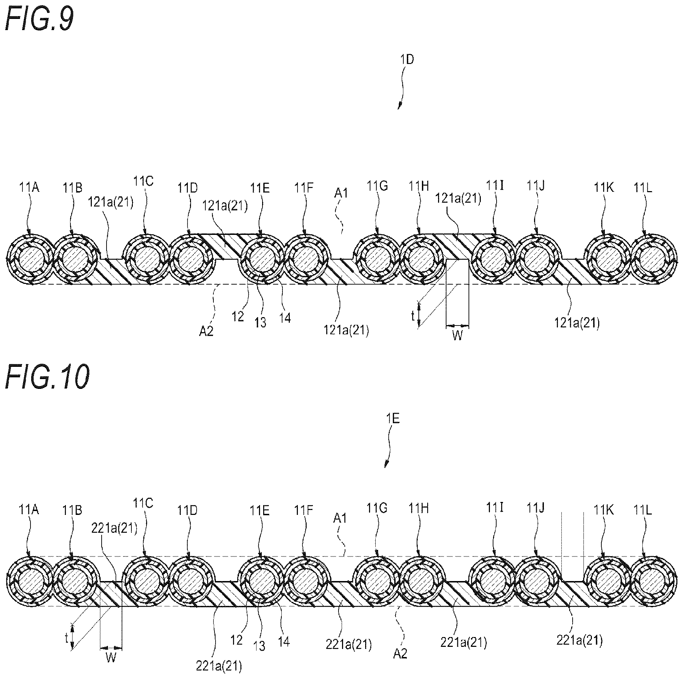

An optical fiber ribbon 1D according to a fourth embodiment will be described with reference to Fig. 9. The same configuration as that of the optical fiber ribbon 1A according to the first embodiment will be denoted by the same reference sign, and the description thereof will be omitted.

Fig. 9 illustrates a cross-sectional view of the optical fiber ribbon 1D. The optical fiber ribbon 1D is different from the optical fiber ribbon 1A according to the first embodiment in that each bridge portion 121a is provided to be biased toward any one side surface of one side surface and the other side surface of a parallel surface to be formed by the optical fibers 11A to 11L disposed in parallel to each other. Each bridge portion 121a provided to be biased toward one side surface is formed so that a location of an upper end of the bridge portion 121a is the same as the location of the broken line A1 connecting the upper ends of the outer peripheral coating portion 21b, or a location of a lower end of the bridge portion 121a is the same as the location of the broken line A2 connecting the lower ends of the outer peripheral coating portion 21b.

For example, the bridge portion 121a between the optical fibers 11B and 11C is provided to be biased toward a lower parallel surface side in Fig. 9, and the location of the lower end of the bridge portion 121a is formed to be the same as the location of the broken line A2. The bridge portion 121a between the optical fibers 11D and 11E is provided to be biased toward an upper parallel surface side in Fig. 9, and the location of the upper end of the bridge portion 121a is formed to be the same as the location of the broken line A1. In this example, the side toward which the bridge portion 121a is provided to be biased is formed to be alternately provided between the lower side and the upper side, but the present invention is not limited thereto. For example, the side toward which the bridge portion 121a is provided to be biased may be formed to be biased toward the lower side and the upper side every two bridge portions 121a. Other configurations are the same as those of the optical fiber ribbon 1A.

According to the optical fiber ribbon 1D having the above-described configuration, since the connecting resin 21 forming the bridge portion 121a is provided to be alternately biased toward one side surface of the parallel surface of the optical fiber ribbon 1D, the optical fiber ribbon 1D is easily bent in a direction of intersecting a width direction of the optical fiber ribbon 1D at each bridge portion 121a. Therefore, when the optical fiber ribbon 1D is mounted in the optical fiber cable, for example, the optical fiber ribbon 1D is rolled to be easily mounted therein. Therefore, the optical fiber ribbon 1D can be formed to be suitable for high-density mounting. The optical fiber ribbon 1D is excellent in batch connectivity because the optical fiber ribbon 1D is less likely to generate warpage than a structure where the bridge portion is biased toward one side surface.

(Fifth embodiment not according to the claimed invention)

An optical fiber ribbon 1E according to a fifth embodiment will be described with reference to Fig. 10. The same configuration as that of the optical fiber ribbon 1D according to the fourth embodiment will be denoted by the same reference sign, and the description thereof will be omitted.

Fig. 10 illustrates a cross-sectional view of the optical fiber ribbon 1E. The optical fiber ribbon 1E is different from the optical fiber ribbon 1D according to the fourth embodiment in that all bridge portions 221a are provided to be biased toward one side surface of the parallel surface to be formed by the optical fibers 11A to 11L disposed in parallel to each other. Each bridge portion 221a provided to be biased toward one parallel surface side is formed so that a location of a lower end of the bridge portion 221a is the same as the location of the broken line A2 connecting the lower ends of the outer peripheral coating portion 21b, or a location of an upper end of the bridge portion 221a is the same as the location of the broken line A1 connecting the upper ends of the outer peripheral coating portion 21b. In this example, all the bridge portions 221a are provided to be biased toward a lower parallel surface side in Fig. 10, and the location of the lower end of the bridge portion 221a is formed to be the same as the location of the broken line A2.

According to the optical fiber ribbon 1E having the above-described configuration, since the connecting resin 21 forming all the bridge portions 221a is biased toward one side surface of the parallel surface of the optical fiber ribbon 1E, the optical fiber ribbon 1E is easily bent in a specific direction (an upper direction in Fig. 10) intersecting of a width direction of the optical fiber ribbon 1E at the bridge portion 221a. Therefore, when the optical fiber ribbon 1E is mounted in the optical fiber cable, for example, the optical fiber ribbon 1E is rolled in one direction to be easily mounted therein. Therefore, the optical fiber ribbon 1E can be formed to be suitable for high-density mounting.

(Sixth embodiment not according to the claimed invention)

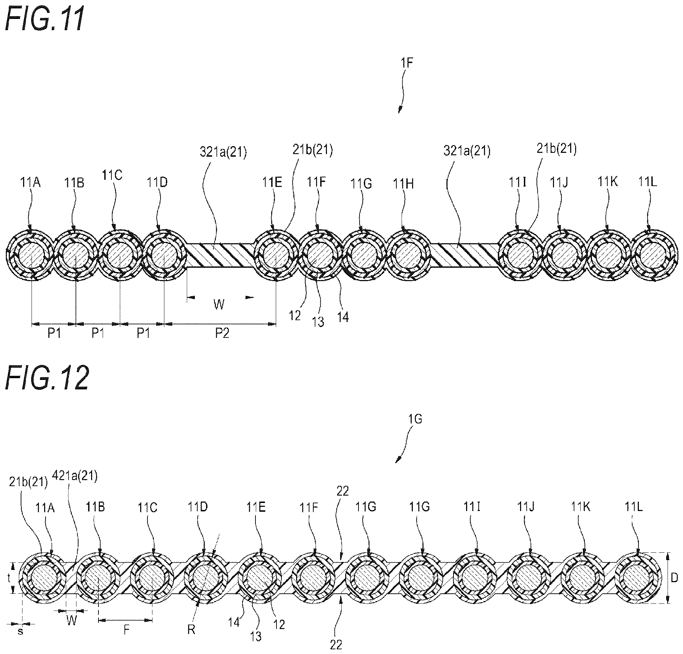

An optical fiber ribbon 1F according to a sixth embodiment will be described with reference to Fig. 11. The same configuration as that of the optical fiber ribbon 1A according to the first embodiment will be denoted by the same reference sign, and the description thereof will be omitted.

Fig. 11 illustrates a cross-sectional view of the optical fiber ribbon 1F. The optical fiber ribbon 1F is different from the optical fiber ribbon 1A according to the first embodiment in which the bridge portion 21a is provided every two cores in that a bridge portion 321a is provided every four cores. In this example, 12 pieces of the optical fibers 11A to 11L are disposed in a state where the side surface of the optical fiber is separated from or in contact with the side surface of another adjacent optical fiber every four cores.

In the case of this example, the distance between the centers of the optical fibers 11 is formed so that the distance P1 between the centers thereof in a state where the optical fibers are in contact with each other is set to approximately 200 $\mu$m. The distance P2 between the centers thereof in a state where the optical fibers are separated from each other at a certain distance is set to approximately 400 $\mu$m. Therefore, the optical fiber ribbon 1F is formed so that the average distance P ((3P1 + P2) / 4) between the centers of the optical fibers 11 is set to 250 $\mu$m. In the case of this example, a width W of the bridge portion 321a (a width in the same direction as a parallel direction of the optical fiber) is formed to be approximately 200 $\mu$m. Other configurations are the same as those of the optical fiber ribbon 1A.

According to the optical fiber ribbon 1F having the above-described configuration, the same effect as that of the optical fiber ribbon 1A of the first embodiment can be obtained.

(Seventh embodiment not according to the claimed invention)

An optical fiber ribbon 1G according to a seventh embodiment will be described with reference to Fig. 12. The same configuration as that of the optical fiber ribbon 1A according to the first embodiment will be denoted by the same reference sign, and the description thereof will be omitted.

Fig. 12 illustrates a cross-sectional view of the optical fiber ribbon 1G. The optical fiber ribbon 1G is different from the optical fiber ribbon 1A according to the first embodiment in which the bridge portion 21a is provided every two cores in that a bridge portion 421a is provided for each core. In this example, 12 pieces of the optical fibers 11A to 11L are disposed in a state where the side surface of the optical fiber is separated from the side surface of another adjacent optical fiber.

In the optical fiber ribbon 1G, a distance F between the centers of the optical fibers 11 is a length obtained by adding an outer diameter R of the optical fiber 11 and a width W of the bridge portion 421a (a width in the same direction as a parallel direction of the optical fiber). In the optical fiber ribbon 1G configured as described above, the outer diameter R of the optical fibers 11 (11A to 11L) is 220 $\mu$m or less. The distance F between the centers of the optical fibers 11 is 220 $\mu$m or more and 280 $\mu$m or less. Other configurations are the same as those of the optical fiber ribbon 1A.

As illustrated in Fig. 12, in this example, a maximum thickness D of the optical fiber ribbon 1G is a thickness obtained by adding a thickness s of the upper and lower outer peripheral coating portion 21b of the optical fiber 11 to the outer diameter R of the optical fiber 11. A bridge width W is the width W of the bridge portion 421a, which is a distance between the outer peripheries of the optical fibers 11.

The present inventors consider a deformation parameter P as an index indicating deformability of the optical fiber ribbon. The deformation parameter P is represented by the following Equation (1) by using the maximum thickness D of the optical fiber ribbon, the width W of the bridge portion, the thickness t of the bridge portion, and the Young's modulus E of the connecting resin.

$$P = D \times E \times t^2 / W \qquad \text{Equation (1)}$$

The deformation parameter P is an index indicating that as a value is larger, the optical fiber ribbon is less likely to be deformed, and as the value is smaller, the optical fiber ribbon is more likely to be deformed.

(Example according to the claimed invention)

Hereinafter, an example in which the deformation parameter P is considered will be described.

In an optical fiber ribbon including a bridge portion for each core such as the optical fiber ribbon 1G illustrated in Fig. 12, the maximum thickness D, bridge thickness t, and Young's modulus E of the optical fiber ribbon are changed, thereby preparing samples No. 1 to 27, the deformation parameters P of which are set to be different from each other. The outer diameters R of the optical fibers of the samples No. 1 to 27 are 220 $\mu$m or less. Silicon is contained in the connecting resins of the samples No. 1 to 27. In this example, the bridge width W is set so that a value obtained by adding the maximum thickness D of the optical fiber ribbon and the bridge width W in each sample is 270 $\mu$m. The samples No. 1 to 27 are those in which the inorganic oxide particle is not mixed with the secondary resin of the optical fiber.

In this example, the transmission loss is evaluated at a low temperature (- 40°C) environment with respect to each sample. Table 1 below shows evaluation results of the transmission loss with respect to the samples No. 1 to 27.

[Table 1]

| Sample No. | Maximum thickness D of optical fiber ribbon (mm) | Bridge width W (mm) | Bridge thickness t (mm) | Young's modulus E (MPa) | Deformation parameter P = D × E × t² / W (MPa.mm²) | Transmission loss in - 40°C environment (dB/Km) | Determination |
|---|---|---|---|---|---|---|---|
| 1 | 0.185 | 0.085 | 0.05 | 0.5 | 0.003 | 0.50 | B |
| 2 | 0.185 | 0.085 | 0.10 | 0.5 | 0.011 | 0.45 | B |
| 3 | 0.185 | 0.085 | 0.15 | 0.5 | 0.024 | 0.33 | B |
| 4 | 0.185 | 0.085 | 0.05 | 30 | 0.163 | 0.26 | A |
| 5 | 0.185 | 0.085 | 0.10 | 30 | 0.653 | 0.24 | A |
| 6 | 0.185 | 0.085 | 0.15 | 30 | 1.469 | 0.23 | A |
| 7 | 0.185 | 0.085 | 0.05 | 200 | 1.088 | 0.22 | A |
| 8 | 0.185 | 0.085 | 0.10 | 200 | 4.353 | 0.23 | A |
| 9 | 0.185 | 0.085 | 0.15 | 200 | 9.794 | 0.26 | A |
| 10 | 0.205 | 0.065 | 0.05 | 0.5 | 0.004 | 0.48 | B |
| 11 | 0.205 | 0.065 | 0.10 | 0.5 | 0.016 | 0.35 | B |
| 12 | 0.205 | 0.065 | 0.15 | 0.5 | 0.035 | 0.29 | A |
| 13 | 0.205 | 0.065 | 0.05 | 30 | 0.237 | 0.24 | A |
| 14 | 0.205 | 0.065 | 0.10 | 30 | 0.946 | 0.21 | A |
| 15 | 0.205 | 0.065 | 0.15 | 30 | 2.129 | 0.23 | A |
| 16 | 0.205 | 0.065 | 0.05 | 200 | 1.577 | 0.22 | A |
| 17 | 0.205 | 0.065 | 0.10 | 200 | 6.308 | 0.26 | A |
| 18 | 0.205 | 0.065 | 0.15 | 200 | 14.192 | 0.28 | A |
| 19 | 0.235 | 0.035 | 0.05 | 0.5 | 0.008 | 0.42 | B |
| 20 | 0.235 | 0.035 | 0.10 | 0.5 | 0.034 | 0.31 | B |
| 21 | 0.235 | 0.035 | 0.15 | 0.5 | 0.076 | 0.27 | A |
| 22 | 0.235 | 0.035 | 0.05 | 30 | 0.504 | 0.23 | A |
| 23 | 0.235 | 0.035 | 0.10 | 30 | 2.014 | 0.22 | A |
| 24 | 0.235 | 0.035 | 0.15 | 30 | 4.532 | 0.26 | A |
| 25 | 0.235 | 0.035 | 0.05 | 200 | 3.357 | 0.25 | A |
| 26 | 0.235 | 0.035 | 0.10 | 200 | 13.429 | 0.30 | A |
| 27 | 0.235 | 0.035 | 0.15 | 200 | 30.214 | 0.38 | B |

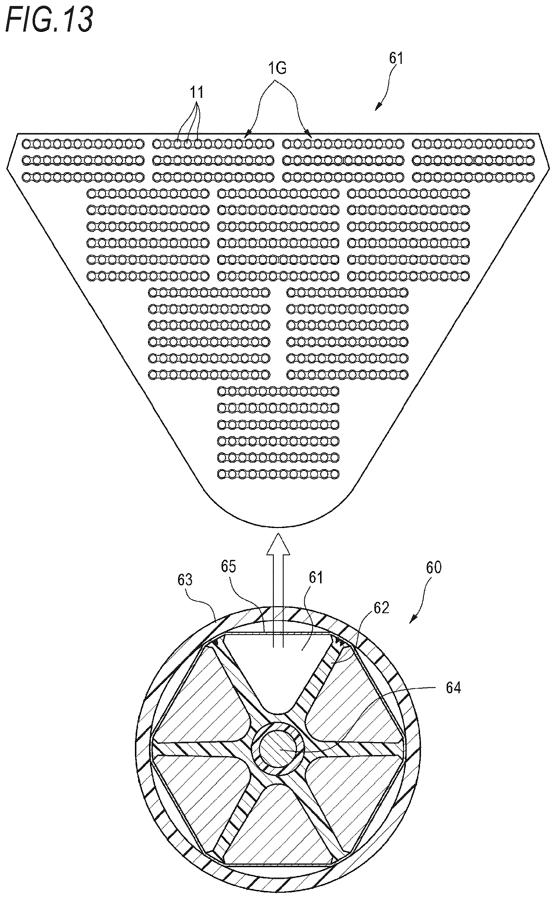

The evaluation for each sample is performed by housing the optical fiber ribbon of each sample in an optical fiber cable for evaluation 60 having a configuration illustrated in Fig. 13.

The slot type optical fiber cable for evaluation 60 includes a slot rod 62 including six slot grooves 61, and a plurality of optical fiber ribbons 1G housed in the slot groove 61. In Fig. 13, in order to describe the inside of the slot groove 61, for convenience, one slot groove 61 is enlarged to show an internal configuration thereof. Since the internal configuration of each slot groove 61 is the same, the other five slot grooves 61 are hatched and illustration of the internal configurations thereof are omitted. The slot rod 62 includes a tension member 64 at a center, and has a structure in which six slot grooves 61 are radially provided. Each optical fiber ribbon 1G is stacked and mounted in the slot groove 61. A press wrapping tape 65 is wrapped around a periphery of the slot rod 62, and a sheath 63 is formed around a periphery of the press wrapping tape 65.

The optical fiber cable for evaluation 60 has an outer diameter of 34 mm and is formed as an optical fiber cable in which 48 samples (the optical fiber ribbons) are housed in each slot groove and the optical fibers having 3,456 cores are provided so that the mounting density becomes 50%. When each fiber cable for evaluation 60 housing each sample is placed in a low temperature (- 40°C) environment, it is determined whether or not a wavelength of signal light is 1.55 $\mu$m and the transmission loss satisfies 0.5 dB/km or less. When the transmission loss of the sample is 0.5 dB/km or less, it is determined that the transmission loss thereof is good, evaluation B is determined when the transmission loss thereof is greater than 0.3 dB/km and 0.5 dB/km or less, and evaluation A is determined when the transmission loss thereof is 0.3 dB/km or less. When the transmission loss thereof exceeds 0.5 dB/km, the transmission loss thereof is determined to be inferior and evaluation C is determined. That is, the sample determined as the evaluation A or the evaluation B is an optical fiber ribbon having a good transmission loss characteristic.

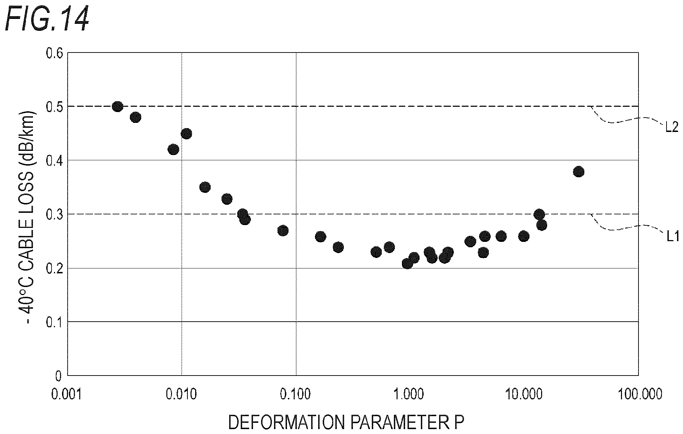

A relationship between the deformation parameter P of each sample and the transmission loss in the environment of - 40°C thereof shown in Table 1 is illustrated in Fig. 14 as a graph of the transmission loss characteristic in the low temperature environment. In Fig. 14, a region below a broken line L1 is a region where the evaluation of the transmission loss is A, and a region between the broken line L1 and a broken line L2 is a region where the evaluation of the transmission loss is B. A region above the broken line L2 is a region where the evaluation of transmission loss is C.

According to the evaluation results in Table 1, the samples having good transmission loss (the samples determined as the evaluation A or the evaluation B) are No. 1 to 27. Among the samples, the samples having particularly good transmission loss (the sample determined as the evaluation A) are No. 4 to 9, No. 12 to 18, and No. 21 to 26. Accordingly, it can be seen that the transmission loss is particularly good when the deformation parameter P is 0.035 or more and 14.2 or less in the optical fiber ribbon 1G.

It can be seen that when the deformation parameter P is too small (less than 0.035), rigidity of the optical fiber ribbon 1G becomes small, and when the optical fiber cable contracts in the low temperature environment, buckling is generated in the optical fiber ribbon 1G such that the transmission loss increases. On the other hand, it can be seen that when the deformation parameter P is too large (greater than 14.2), the rigidity of the optical fiber ribbon 1G becomes large, and for example, when the optical fiber cable is drum-wound and bent, the transmission loss increases because the optical fiber ribbon 1G is difficult to be deformed in a direction intersecting of a width direction of the optical fiber ribbon 1G.

In the case of improving the core density of the optical fiber ribbon 1G mounted in the optical fiber cable, the maximum thickness D of the optical fiber ribbon 1G is desirably 235 $\mu$m or less.

In order to further improve the transmission loss, the secondary resin of the optical fiber is examined. Therefore, in the same configuration as that of the sample No. 1, a sample, in which the optical fiber is changed to an optical fiber obtained by mixing the secondary resin with the inorganic oxide particle, is separately prepared, and the transmission loss in the low temperature (- 40°C) environment is evaluated in the same manner as that of the samples 1 to 27. As a result, in the transmission loss in the environment of - 40°C in Table 1, the transmission loss of 0.5 dB/km (the sample No. 1) can be reduced to 0.3 dB/km.

The transmission loss of the sample No. 1 is the largest among the samples No. 1 to 27, such that when the inorganic oxide particle is mixed with the secondary resin, the transmission loss becomes 0.3 dB/km or less in all the samples No. 1 to 27.

When the connecting resin of the optical fiber ribbon 1G contains silicon, the friction coefficient of the connecting resin becomes smaller than that of the resin that does not contain silicon. Therefore, in the low temperature environment, each optical fiber ribbon 1G has a small frictional force with other members disposed therearound, such that the optical fiber ribbon 1G easily moves in the longitudinal direction.

In order to verify that the transmission loss characteristic in the low temperature environment is improved by containing silicon in the connecting resin, a sample, in which the connecting resin is changed to a connecting resin to which silicon is not added, is separately prepared, and evaluation of the transmission loss is performed in the low temperature (- 40°C) environment in the same manner as that of the samples No. 1 to 27. According to the evaluation thereof, the above-described sample, in which the connecting resin is changed to the connecting resin to which silicon is not added, has the transmission loss in the low temperature environment which is about 1.5 times higher than that of the samples No. 1 to 27 to which silicon is added. That is, it can be seen that when silicon is added to the connecting resin, the transmission loss characteristic in the low temperature environment is improved and the transmission loss can be reduced to about two-third as compared with the connecting resin to which silicon is not added.

REFERENCE SIGNS LIST

1A ~ 1G: optical fiber ribbon
11 (11A~ 11L): optical fiber

12: glass fiber
13: inner coating layer
14: outer coating layer
21: connecting resin
21a, 121a, 221a, 321a, 421a: bridge portion
21b: peripheral coating portion
22: recessed portion
23: dividing portion
31A ~ 31L: V-groove
40: manufacturing apparatus
41: coating die
42: curing apparatus
50: optical fiber cable
60: optical fiber cable for evaluation
51, 61: slot groove
52, 62: slot rod
53, 63: cable sheath
54, 64: tension member
55, 65: press wrapping tape

**Claims**

1. An optical fiber ribbon (1A, 1B, 1C, 1D, 1E, 1F, 1G), comprising:

   a plurality of optical fibers (11A, 11B, 11C, 11D, 11E, 11F, 11G, 11H, 11J, 11K, 11L) disposed in parallel to each other;
   a connecting resin (21) for connecting the plurality of optical fibers (11A, 11B, 11C, 11D, 11E, 11F, 11G, 11H, 11J, 11K, 11L); and
   a bridge portion (21a, 121a, 221a, 321a, 421a) formed of the connecting resin (21),
   wherein the plurality of optical fibers (11A, 11B, 11C, 11D, 11E, 11F, 11G, 11H, 11J, 11K, 11L) are disposed in a state where a side surface of the optical fiber (11A, 11B, 11C, 11D, 11E, 11F, 11G, 11H, 11J, 11K, 11L) is separated from or in contact with a side surface of another adjacent optical fiber (11A, 11B, 11C, 11D, 11E, 11F, 11G, 11H, 11J, 11K, 11L),
   wherein the bridge portion (21a, 121a, 221a, 321a, 421a) is provided between the optical fibers (11A, 11B, 11C, 11D, 11E, 11F, 11G, 11H, 11J, 11K, 11L) disposed in the separated state,
   wherein an outer diameter of the optical fiber (11A, 11B, 11C, 11D, 11E, 11F, 11G, 11H, 1 1J, 11K, 11L) is 220 $\mu$m or less,
   wherein an average distance between centers of the plurality of optical fibers (11A, 11B, 11C, 11D, 11E, 11F, 11G, 11H, 1 1J, 11K, 11L) is 220 $\mu$m or more and 280 $\mu$m or less, and
   a maximum thickness D of the optical fiber ribbon (1A, 1B, 1C, 1D, 1E, 1F, 1G) including the optical fiber (11A, 11B, 11C, 11D, 11E, 11F, 11G, 11H, 11J, 11K, 11L) is 235 $\mu$m or less, **characterized in that** the connecting resin (21) has a Young's modulus of 0.5 MPa or more and 200 MPa or less at room temperature, and
   when a width of the bridge portion (21a, 121a, 221a, 321a, 421a) is defined as W, a thickness of the bridge portion (21a, 121a, 221a, 321a, 421a) is defined as t, and a Young's modulus at room temperature of the connecting resin (21) is defined as E, a deformation parameter P represented by $P = D \times E \times t^2/ W$ is 0.035 MPa.mm$^2$ or more and 14.2 MPa.mm$^2$ or less.

2. The optical fiber ribbon (1A, 1B, 1C, 1D, 1E, 1F, 1G) according to claim 1,

   wherein the number of the optical fibers (11A, 11B, 11C, 11D, 11E, 11F, 11G, 11H, 1 1J, 11K, 11L) disposed in the contact state is N, and
   the N is a multiple of 2.

3. The optical fiber ribbon (1A, 1B, 1C, 1D, 1E, 1F, 1G) according to claim 1 or 2,
   wherein the bridge portion (21) includes a recessed portion (22).

4. The optical fiber ribbon (1A, 1B, 1C, 1D, 1E, 1F, 1G) according to any one of claims 1 to 3,

wherein the bridge portion (21) is provided to be biased toward any one side surface of one side surface and the other side surface of a parallel surface of the optical fiber ribbon (1A, 1B, 1C, 1D, 1E, 1F, 1G).

5. The optical fiber ribbon (1A, 1B, 1C, 1D, 1E, 1F, 1G) according to any one of claims 1 to 4,
wherein the bridge portion (21) intermittently includes a dividing portion (23) in a longitudinal direction of the optical fiber ribbon (1A, 1B, 1C, 1D, 1E, 1F, 1G).

6. The optical fiber ribbon (1A, 1B, 1C, 1D, 1E, 1F, 1G) according to any one of claims 1 to 5,
wherein the connecting resin (21) contains a silicon-based release agent.

7. The optical fiber ribbon (1A, 1B, 1C, 1D, 1E, 1F, 1G) according to any one of claims 1 to 6,
wherein a peeling strength between an outermost layer of the optical fiber (11A, 11B, 11C, 11D, 11E, 11F, 11G, 11H, 11J, 11K, 11L) and the connecting resin (21) is less than 0.1 N/mm.

8. The optical fiber ribbon (1A, 1B, 1C, 1D, 1E, 1F, 1G) according to any one of claims 1 to 7,

wherein the optical fiber (11A, 11B, 11C, 11D, 11E, 11F, 11G, 11H, 11J, 11K, 11L) includes a glass fiber (12) and a coating that covers an outer periphery of the glass fiber,
wherein the coating includes two coating layers (13, 14),
wherein an outer coating layer (14) of the two coating layers is a cured product of a resin composition containing: a base resin containing a urethane acrylate oligomer or a urethane methacrylate oligomer, a monomer having a phenoxy group, a photopolymerization initiator, and a silane coupling agent; and a hydrophobic inorganic oxide particle, and
wherein a content of the inorganic oxide particle in the resin composition is 1% by mass or more and 45% by mass or less based on a total amount of the resin composition.

9. The optical fiber ribbon (1A, 1B, 1C, 1D, 1E, 1F, 1G) according to any one of claims 1 to 8,
wherein in the optical fiber (11A, 11B, 11C, 11D, 11E, 11F, 11G, 11H, 11J, 11K, 11L), bending loss at a wavelength of 1,550 nm is 0.5 dB or less for a bending diameter of $\varphi$15 mm $\times$ 1 turn, and 0.1 dB or less for a bending diameter of $\varphi$20 mm $\times$ 1 turn.

10. An optical fiber cable (50), comprising:

the optical fiber ribbon (1A, 1B, 1C, 1D, 1E, 1F, 1G) according to any one of claims 1 to 9; and
a cable sheath (53, 63),
wherein the optical fiber ribbon (1A, 1B, 1C, 1D, 1E, 1F, 1G) is mounted inside the cable sheath (53, 63).

11. A method for manufacturing an optical fiber ribbon (1A, 1B, 1C, 1D, 1E, 1F, 1G) according to any one of claims 1 to 9, comprising:

a step of allowing a plurality of optical fibers (11A, 11B, 11C, 11D, 11E, 11F, 11G, 11H, 11J, 11K, 11L) of which outer diameter is 220 $\mu$m or less to be disposed in parallel to each other;
a step of allowing the plurality of optical fibers (11A, 11B, 11C, 11D, 11E, 11F, 11G, 11H, 11J, 11K, 11L) disposed in parallel to each other to be disposed in a state where a side surface of the optical fiber (11A, 11B, 11C, 11D, 11E, 11F, 11G, 11H, 11J, 11K, 11L) is separated from or in contact with a side surface of another adjacent optical fiber(11A, 11B, 11C, 11D, 11E, 11F, 11G, 11H, 11J, 11K, 11L), setting an average distance between centers of the plurality of optical fibers (11A, 11B, 11C, 11D, 11E, 11F, 11G, 11H, 11J, 11K, 11L) to 220 $\mu$m or more and 280 $\mu$m or less and allowing a die (41) to pass therethrough, and coating a portion in the separated state and outer peripheries of the plurality of optical fibers (11A, 11B, 11C, 11D, 11E, 11F, 11G, 11H, 11J, 11K, 11L) in the contact state with a connecting resin (21); and
a step of curing the connecting resin (21) and providing a bridge portion (21a, 121a, 221a, 321a, 421a) between the optical fibers (11A, 11B, 11C, 11D, 11E, 11F, 11G, 11H, 11J, 11K, 11L) disposed in the separated state.

**Patentansprüche**

1. Optisches Faserband (1A, 1B, 1C, 1D, 1E, 1F, 1G), umfassend:

eine Vielzahl von optischen Fasern (11A, 11B, 11C, 11D, 11E, 11F, 11G, 11H, 11J, 11K, 11L), die parallel zueinander angeordnet sind;

ein Verbindungsharz (21) zum Verbinden der Vielzahl von optischen Fasern (11A, 11B, 11C, 11D, 11E, 11F, 11G, 11H, 11J, 11K, 11L); und

einen Brückenabschnitt (21a, 121a, 221a, 321a, 421a), der aus dem Verbindungsharz (21) gebildet ist, wobei die Vielzahl von optischen Fasern (11A, 11B, 11C, 11D, 11E, 11F, 11G, 11H, 11J, 11K, 11L) in einem Zustand angeordnet sind, in dem eine Seitenfläche der optischen Faser (11A, 11B, 11C, 11D, 11E, 11F, 11G, 11H, 11J, 11K, 11L) von einer Seitenfläche einer anderen benachbarten optischen Faser (11A, 11B, 11C, 11D, 11E, 11F, 11G, 11H, 11J, 11K, 11L) getrennt oder in Kontakt mit dieser ist,

wobei der Brückenabschnitt (21a, 121a, 221a, 321a, 421a) zwischen den optischen Fasern (11A, 11B, 11C, 11D, 11E, 11F, 11G, 11H, 11J, 11K, 11L) bereitgestellt ist, die in dem getrennten Zustand angeordnet sind,

wobei ein Außendurchmesser der optischen Faser (11A, 11B, 11C, 11D, 11E, 11F, 11G, 11H, 11J, 11K, 11L) 220 $\mu$m oder weniger beträgt,

wobei ein durchschnittlicher Abstand zwischen den Zentren der Vielzahl von optischen Fasern (11A, 11B, 11C, 11D, 11E, 11F, 11G, 11H, 11J, 11K, 11L) 220 $\mu$m oder mehr und 280 $\mu$m oder weniger beträgt, und

eine maximale Dicke D des optischen Faserbandes (1A, 1B, 1C, 1D, 1E, 1F, 1G), das die optische Faser (11A, 11B, 11C, 11D, 11E, 11F, 11G, 11H, 11J, 11K, 11L) einschließt, 235 $\mu$m oder weniger beträgt, **dadurch gekennzeichnet, dass** das Verbindungsharz (21) einen Elastizitätsmodul von 0,5 MPa oder mehr und 200 MPa oder weniger bei Raumtemperatur aufweist, und

wenn eine Breite des Brückenabschnitts (21a, 121a, 221a, 321a, 421a) als W definiert ist, eine Dicke des Brückenabschnitts (21a, 121a, 221a, 321a, 421a) als t definiert ist und ein Elastizitätsmodul bei Raumtemperatur des Verbindungsharzes (21) als E definiert ist, ein Verformungsparameter P, repräsentiert durch P = D $\times$ E $\times$ $t^2$/W, 0,035 MPa.mm$^2$ oder mehr und 14,2 MPa.mm$^2$ oder weniger beträgt.

2. Optisches Faserband (1A, 1B, 1C, 1D, 1E, 1F, 1G) nach Anspruch 1,

   wobei die Anzahl der optischen Fasern (11A, 11B, 11C, 11D, 11E, 11F, 11G, 11H, 11J, 11K, 11L), die in dem Kontaktzustand angeordnet sind, N ist, und
   das N ein Vielfaches von 2 ist.

3. Optisches Faserband (1A, 1B, 1C, 1D, 1E, 1F, 1G) nach Anspruch 1 oder 2, wobei der Brückenabschnitt (21) einen vertieften Abschnitt (22) einschließt.

4. Optisches Faserband (1A, 1B, 1C, 1D, 1E, 1F, 1G) nach einem der Ansprüche 1 bis 3,
   wobei der Brückenabschnitt (21) bereitgestellt ist, um in Richtung einer beliebigen Seitenfläche einer Seitenfläche und der anderen Seitenfläche einer parallelen Fläche des optischen Faserbandes (1A, 1B, 1C, 1D, 1E, 1F, 1G) vorgespannt zu sein.

5. Optisches Faserband (1A, 1B, 1C, 1D, 1E, 1F, 1G) nach einem der Ansprüche 1 bis 4,
   wobei der Brückenabschnitt (21) intermittierend einen Teilungsabschnitt (23) in Längsrichtung des optischen Faserbandes (1A, 1B, 1C, 1D, 1E, 1F, 1G) einschließt.

6. Optisches Faserband (1A, 1B, 1C, 1D, 1E, 1F, 1G) nach einem der Ansprüche 1 bis 5,
   wobei das Verbindungsharz (21) ein Trennmittel auf Silikonbasis enthält.

7. Optisches Faserband (1A, 1B, 1C, 1D, 1E, 1F, 1G) nach einem der Ansprüche 1 bis 6,
   wobei eine Schälfestigkeit zwischen einer äußersten Schicht der optischen Faser (11A, 11B, 11C, 11D, 11E, 11F, 11G, 11H, 11J, 11K, 11L) und dem Verbindungsharz (21) weniger als 0,1 N/mm beträgt.

8. Optisches Faserband (1A, 1B, 1C, 1D, 1E, 1F, 1G) nach einem der Ansprüche 1 bis 7,

   wobei die optische Faser (11A, 11B, 11C, 11D, 11E, 11F, 11G, 11H, 11J, 11K, 11L) eine Glasfaser (12) und eine Beschichtung einschließt, die eine äußere Peripherie der Glasfaser bedeckt,
   wobei die Beschichtung zwei Beschichtungsschichten (13, 14) einschließt,
   wobei eine äußere Beschichtungsschicht (14) der beiden Beschichtungsschichten ein gehärtetes Produkt einer Harzzusammensetzung ist, die Folgendes enthält: ein Basisharz, das ein Urethanacrylatoligomer oder ein Urethanmethacrylatoligomer enthält, ein Monomer, das eine Phenoxygruppe, einen Photopolymerisationsinitiator und ein Silankopplungsmittel aufweist; und ein hydrophobes anorganisches Oxidteilchen, und

wobei der Gehalt des anorganischen Oxidteilchens in der Harzzusammensetzung 1 Massenprozent oder mehr und 45 Massenprozent oder weniger, basierend auf der Gesamtmenge der Harzzusammensetzung, beträgt.

9. Optisches Faserband (1A, 1B, 1C, 1D, 1E, 1F, 1G) nach einem der Ansprüche 1 bis 8,
   wobei in der optischen Faser (11A, 11B, 11C, 11D, 11E, 11F, 11G, 11H, 11J, 11K, 11L) der Biegeverlust bei einer Wellenlänge von 1 550 nm 0,5 dB oder weniger für einen Biegedurchmesser von φ15 mm × 1 Windung und 0,1 dB oder weniger für einen Biegedurchmesser von φ20 mm × 1 Windung beträgt.

10. Optisches Faserkabel (50), umfassend:

    das optische Faserband (1A, 1B, 1C, 1D, 1E, 1F, 1G) nach einem der Ansprüche 1 bis 9; und
    einen Kabelmantel (53, 63),
    wobei das optische Faserband (1A, 1B, 1C, 1D, 1E, 1F, 1G) innerhalb des Kabelmantels (53, 63) montiert ist.

11. Verfahren zum Herstellen eines optischen Faserbandes (1A, 1B, 1C, 1D, 1E, 1F, 1G) nach einem der Ansprüche 1 bis 9, umfassend:

    einen Schritt des Erlaubens einer Vielzahl von optischen Fasern (11A, 11B, 11C, 11D, 11E, 11F, 11G, 11H, 11J, 11K, 11L), deren Außendurchmesser 220 μm oder weniger beträgt, parallel zueinander angeordnet sind;
    einen Schritt des Erlaubens der Vielzahl optischen Fasern (11A, 11B, 11C, 11D, 11E, 11F, 11G, 11H, 11J, 11K, 11L), die parallel zueinander angeordnet sind, in einem Zustand angeordnet zu werden, in dem eine Seitenfläche der optischen Faser (11A, 11B, 11C, 11D, 11E, 11F, 11G, 11H, 11J, 11K, 11L) von einer Seitenfläche einer anderen benachbarten optischen Faser (11A, 11B, 11C, 11D, 11E, 11F, 11G, 11H, 11J, 11K, 11L) getrennt oder in Kontakt mit dieser ist,
    Einstellen eines durchschnittlichen Abstands zwischen den Zentren der Vielzahl von optischen Fasern (11A, 11B, 11C, 11D, 11E, 11F, 11G, 11H, 11J, 11K, 11L) auf 220 μm oder mehr und 280 μm oder weniger und Erlauben einer Matrize (41) durch diesen hindurchzugehen, und
    Beschichten eines Abschnitts im getrennten Zustand und äußerer Peripherien der Vielzahl von optischen Fasern (11A, 11B, 11C, 11D, 11E, 11F, 11G, 11H, 11J, 11K, 11L) im Kontaktzustand mit einem Verbindungsharz (21); und
    einen Schritt des Aushärtens des Verbindungsharzes (21) und Bereitstellens eines Brückenabschnitts (21a, 121a, 221a, 321a, 421a) zwischen den optischen Fasern (11A, 11B, 11C, 11D, 11E, 11F, 11G, 11H, 11J, 11K, 11L), die in dem getrennten Zustand angeordnet sind.

**Revendications**

1. Ruban de fibres optiques (1A, 1B, 1C, 1D, 1E, 1F, 1G), comprenant :

   une pluralité de fibres optiques (11A, 11B, 11C, 11D, 11E, 11F, 11G, 11H, 11J, 11K, 11L) disposées parallèlement les unes aux autres ;
   une résine de liaison (21) pour lier la pluralité de fibres optiques (11A, 11B, 11C, 11D, 11E, 11F, 11G, 11H, 11J, 11K, 11L); et
   une partie pont (21a, 121a, 221a, 321a, 421a) formée de la résine de liaison (21),
   dans lequel la pluralité de fibres optiques (11A, 11B, 11C, 11D, 11E, 11F, 11G, 11H, 11J, 11K, 11L) est disposée dans un état où une surface latérale de la fibre optique (11A, 11B, 11C, 11D, 11E, 11F, 11G, 11H, 11J, 11K, 11L) est séparée de ou en contact avec une surface latérale d'une autre fibre optique adjacente (11A, 11B, 11C, 11D, 11E, 11F, 11G, 11H, 11J, 11K, 11L),
   dans lequel la partie pont (21a, 121a, 221a, 321a, 421a) est prévue entre les fibres optiques (11A, 11B, 11C, 11D, 11E, 11F, 11G, 11H, 11J, 11K, 11L) disposées dans l'état séparé,
   dans lequel un diamètre externe de la fibre optique (11A, 11B, 11C, 11D, 11E, 11F, 11G, 11H, 11J, 11K, 11L) est de 220 μm ou moins,
   dans lequel une distance moyenne entre des centres de la pluralité de fibres optiques (11A, 11B, 11C, 11D, 11E, 11F, 11G, 11H, 11J, 11K, 11L) est de 220 μm ou plus et de 280 μm ou moins, et
   une épaisseur maximale D du ruban de fibres optiques (1A, 1B, 1C, 1D, 1E, 1F, 1G) incluant la fibre optique (11A, 11B, 11C, 11D, 11E, 11F, 11G, 11H, 11J, 11K, 11L) est de 235 μm ou moins, **caractérisé en ce que** la résine de liaison (21) présente un module de Young de 0,5 MPa ou plus et de 200 MPa ou moins à température ambiante, et

lorsqu'une largeur de la partie pont (21a, 121a, 221a, 321a, 421a) est définie comme W, une épaisseur de la partie pont (21a, 121a, 221a, 321a, 421a) est définie comme t, et un module de Young à la température ambiante de la résine de liaison (21) est défini comme E, un paramètre de déformation P représenté par $P = D \times E \times t^2/W$ est de 0,035 MPa.mm$^2$ ou plus et de 14,2 MPa.mm$^2$ ou moins.

2. Ruban de fibres optiques (1A, 1B, 1C, 1D, 1E, 1F, 1G) selon la revendication 1,

   dans lequel le nombre de fibres optiques (11A, 11B, 11C, 11D, 11E, 11F, 11G, 11H, 11J, 11K, 11L) disposées dans l'état de contact est N, et
   le N est un multiple de 2.

3. Ruban de fibres optiques (1A, 1B, 1C, 1D, 1E, 1F, 1G) selon la revendication 1 ou la revendication 2,
   dans lequel la partie pont (21) inclut une partie évidée (22).

4. Ruban de fibres optiques (1A, 1B, 1C, 1D, 1E, 1F, 1G) selon l'une quelconque des revendications 1 à 3,
   dans lequel la partie pont (21) est prévue pour être sollicitée vers n'importe quelle surface latérale d'une surface latérale et l'autre surface latérale d'une surface parallèle du ruban de fibres optiques (1A, 1B, 1C, 1D, 1E, 1F, 1G).

5. Ruban de fibres optiques (1A, 1B, 1C, 1D, 1E, 1F, 1G) selon l'une quelconque des revendications 1 à 4,
   dans lequel la partie pont (21) inclut par intermittence une partie de division (23) dans une direction longitudinale du ruban de fibres optiques (1A, 1B, 1C, 1D, 1E, 1F, 1G).

6. Ruban de fibres optiques (1A, 1B, 1C, 1D, 1E, 1F, 1G) selon l'une quelconque des revendications 1 à 5,
   dans lequel la résine de liaison (21) contient un agent de démoulage à base de silicium.

7. Ruban de fibres optiques (1A, 1B, 1C, 1D, 1E, 1F, 1G) selon l'une quelconque des revendications 1 à 6,
   dans lequel une résistance au pelage entre une couche la plus externe de la fibre optique (11A, 11B, 11C, 11D, 11E, 11F, 11G, 11H, 11J, 11K, 11L) et la résine de liaison (21) est inférieure à 0,1 N/mm.

8. Ruban de fibres optiques (1A, 1B, 1C, 1D, 1E, 1F, 1G) selon l'une quelconque des revendications 1 à 7,

   dans lequel la fibre optique (11A, 11B, 11C, 11D, 11E, 11F, 11G, 11H, 11J, 11K, 11L) inclut une fibre de verre (12) et un revêtement qui recouvre une périphérie externe de la fibre de verre,
   dans lequel le revêtement inclut deux couches de revêtement (13, 14),
   dans lequel une couche de revêtement externe (14) des deux couches de revêtement est un produit durci d'une composition de résine contenant : une résine de base contenant un oligomère d'uréthane acrylate ou un oligomère d'uréthane méthacrylate, un monomère présentant un groupe phénoxy, un initiateur de photopolymérisation, et un agent de couplage silane ; et une particule d'oxyde inorganique hydrophobe, et
   dans lequel une teneur de la particule d'oxyde inorganique dans la composition de résine est de 1 % en masse ou plus et de 45 % en masse ou moins sur la base d'une quantité totale de la composition de résine.

9. Ruban de fibres optiques (1A, 1B, 1C, 1D, 1E, 1F, 1G) selon l'une quelconque des revendications 1 à 8,
   dans lequel dans la fibre optique (11A, 11B, 11C, 11D, 11E, 11F, 11G, 11H, 11J, 11K, 11L), la perte par courbure à une longueur d'onde de 1 550 nm est de 0,5 dB ou moins pour un diamètre de courbure de φ15 mm × 1 tour, et 0,1 dB ou moins pour un diamètre de courbure de φ20 mm × 1 tour.

10. Câble à fibre optique (50), comprenant :

    le ruban de fibres optiques (1A, 1B, 1C, 1D, 1E, 1F, 1G) selon l'une quelconque des revendications 1 à 9 ; et
    une gaine de câble (53, 63),
    dans lequel le ruban de fibres optiques (1A, 1B, 1C, 1D, 1E, 1F, 1G) est monté à l'intérieur de la gaine de câble (53, 63).

11. Procédé de fabrication d'un ruban de fibres optiques (1A, 1B, 1C, 1D, 1E, 1F, 1G) selon l'une quelconque des revendications 1 à 9, comprenant :

    une étape consistant à permettre à une pluralité de fibres optiques (11A, 11B, 11C, 11D, 11E, 11F, 11G, 11H, 11J, 11K, 11L) dont le diamètre externe est de 220 μm ou moins d'être disposées parallèlement les unes aux autres ;

une étape consistant à permettre à la pluralité de fibres optiques (11A, 11B, 11C, 11D, 11E, 11F, 11G, 11H, 11J, 11K, 11L) disposées parallèlement les unes aux autres d'être disposées dans un état où une surface latérale de la fibre optique (11A, 11B, 11C, 11D, 11E, 11F, 11G, 11H, 11J, 11K, 11L) est séparée de ou en contact avec une surface latérale d'une autre fibre optique adjacente (11A, 11B, 11C, 11D, 11E, 11F, 11G, 11H, 11J, 11K, 11L), un réglage d'une distance moyenne entre des centres de la pluralité de fibres optiques (11A, 11B, 11C, 11D, 11E, 11F, 11G, 11H, 11J, 11K, 11L) à 220 $\mu$m ou plus et 280 $\mu$m ou moins et une action consistant à permettre à une filière (41) de passer à travers celles-ci, et une action consistant à enduire une partie dans l'état séparé et des périphéries externes de la pluralité de fibres optiques (11A, 11B, 11C, 11D, 11E, 11F, 11G, 11H, 11J, 11K, 11L) dans l'état de contact avec une résine de liaison (21) ; et

une étape de durcissement de la résine de liaison (21) et de fourniture d'une partie pont (21a, 121a, 221a, 321a, 421a) entre les fibres optiques (11A, 11B, 11C, 11D, 11E, 11F, 11G, 11H, 11K, 11L) disposées dans l'état séparé.

FIG.1

FIG.2

FIG.3

200

P4

11A 11B 11C 11D 11E 11F 11G 11H 11I 11J 11K 11L

31A 31B 31C 31D 31E 31F 31G 31H 31I 31J 31K 31L

32

30

P0

FIG.4

1A

P1 P2

11A 11B 11C 11D 11E 11F 11G 11H 11I 11J 11K 11L

31A 31B 31C 31D 31E 31F 31G 31H 31I 31J 31K 31L

P0

32

30

FIG.5

CURING APPARATUS

FIG.6

*FIG.7*

*FIG.8*

*FIG.9*

1D

11A 11B 11C 11D 11E 11F A1 11G 11H 11I 11J 11K 11L
121a(21) 121a(21) 121a(21)
A2 12 13 14 121a(21) t 121a(21)
W

*FIG.10*

1E

11A 11B 11C 11D 11E 11F A1 11G 11H 11I 11J 11K 11L
221a(21) 221a(21) 221a(21) 221a(21)
t 12 13 14 221a(21) A2 221a(21)
W 221a(21)

FIG.11

FIG.12

## FIG.13

*FIG.14*

**EP 3 978 976 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019111801 A
- JP 2019099147 A
- JP 2010117592 A
- JP 2015052704 A
- JP 2013088617 A
- WO 2018105424 A
- US 2017115461 A1